# EUROPEAN PATENT APPLICATION

(11) **EP 2 354 099 A1**
(43) Date of publication of application: **10.08.2011**
(21) Application number: 11153849.2
(22) Date of filing: 09.02.2011
(51) Int. Cl.: C02F 3/34, C02F 5/02, C02F 103/08

(54) **Valorisation of divalent cations in brine and associated co2 sequestration by microorganisms.**

(30) Priority: 09.02.2010 EP 10153119
(71) Applicant: Biomim-Greenloop, 1000 Brussels (BE)
(72) Inventor: Zaoui, Caroline, 1030 Brussels (BE); Chapelle, Gauthier, 1090 Brussels (BE); Wouters, Noemie, 9100 St Niklaas (BE); Valayer, Jean, 75012 Paris (FR); Van Loosdrecht, Mark, 2548 AG Den Haag (NL); Rivadeneyra Ruiz, Maria Angustias, 18071 Granada (ES)
(74) Representative: Roufosse, Micheline C.

(57) **Abstract**

The present invention relates to the valorisation of elevated divalent cation concentration contained in brines using microbiological precipitation and its associated carbon sequestration.

## Description

### FIELD OF THE INVENTION.

The present invention relates to the valorisation of elevated calcium and magnesium cation concentration contained in brines by means of microbiological precipitation. It also relates to carbon sequestration associated with the process.

### DESCRIPTION OF THE BACKGROUND ART.

Large-scale desalination units typically use extremely large amounts of energy as well as specialised, expensive infrastructures. The large energy reserves of many Middle Eastern countries, along with their relative water scarcity, have led to extensive construction of desalination units accounting to about 75% of the total world capacity, whereas about 12% is produced in the America, mostly in the Caribbean. The industry has also become important in Europe, in countries such as Greece, Cyprus, Spain and the market for desalination will continue to grow as the planet gets more crowed.

The leading method uses multi-stage flash distillation. The traditional process used in these operations is vacuum distillation whereby water being under reduced pressure boils at a much lower temperature than normal.

In the last decade, membrane processes have developed, and most new facilities use reverse osmosis technology. Membrane processes use semi-permeable membranes and pressure to separate salts from water. They use less energy than thermal distillation.

One of the main environmental considerations of ocean water desalination plants is the impact of the open ocean water intakes on marine life such as plankton, fish eggs or fish larvae, especially when they are co-located with power plants. Other environmental concerns include the introduction of brine waste effluent in coastal areas where it is very disruptive and kills a lot of marine organisms.

In addition, as the different desalinating methods are high energy demanding processes, desalination units are, indirectly, high CO₂ emitters.

Regardless of the method used, there is always a highly concentrated waste product consisting of everything that was removed from the created fresh water, currently referred to as brine.

Reverse osmosis, for instance, may require the disposal of waste water with salinity twice that of normal seawater. The benthic community cannot accommodate such an extreme change in salinity and many filter-feeding animals are destroyed by osmotic pressure when such water is returned to the ocean. To limit the environmental impact of returning the brine to the ocean, it can be diluted with another stream of water. Another method is to spread the brine over a very large area in order to produce only a slight increase in salinity.

Several remedies to these problems have already been developed such as for example:
● Energy recovery via the recuperation of elevated residual brines pressure by turbines
● Zero Liquid Discharge concept whereby brine is re-processed in order to minimise brine production. It is re-processed, by reverse osmosis (RO), which keeps increasing concentration.
● Search for environmental sustainable power sources using renewable energy.

These three approaches treat the problems separately and do not contemplate possible synergies. In addition, none of them makes use of the large amount of calcium cations available in the brine.

### SUMMARY OF THE INVENTION.

It is an objective of the present invention to sequester CO₂ using a biological process preferably a microbiological process.

It is another objective of the present invention to address the disposal of brine using an ecologically friendly process.

It is also an objective of the present invention to use the brines as divalent cation source for carbonate precipitation

It is yet another objective of the present invention to use a biological process to treat brine, preferably a microbiological process.

It is a further objective of the present invention to mitigate CO₂ emission.

In accordance with the present invention, any one of the foregoing objectives are realised as defined in the independent claims. Preferred embodiments are defined in the dependent claims.

### DETAILED DESCRIPTION.

The present invention discloses a method to dispose of brine produced in desalination plants by precipitating divalent cations contained in said brines using a biological process, preferably a microbiological process.

More particularly, it discloses a method for precipitating calcium and optionally other divalent cations, contained in brine originating from desalination plants, as carbonates and simultaneously achieving sequestration of CO₂ using halotolerant microorganisms having a carbonic anhydrase activity (CA).

The halotolerant microorganisms preferably used in the present invention are living i.e, whole cell, bacteria. They can be selected from Bacteria and Archaea, in particular Bacillaceae, Pseudomonadacea, Enterobacteriaceae, or Vibrionaceae, more preferably within genera: Halomonas, Marinomonas, Chromohalobacter, and Halobacillus.

Direct brine disposal is therefore avoided resulting in environmental credits and in a direct or indirect sequestration of CO₂ by:
1) in situ carbonate precipitation in the desalination plants, said precipitate having potential industrial use
2) use of brine as feedstock for other types of industries where carbonate precipitation is also beneficial.
3) use of brine as feedstock for other types of industries where sodium is required.

The invention is based on the capacity of halotolerant microorganisms, preferably halophilic microorganisms, to precipitate carbonate in the presence of organic material under sufficiently alkaline conditions and with an appropriate cation source. Moreover some of these microorganisms have a carbonic anhydrase (CA) activity that accelerates the inter-conversion of CO₂ and bicarbonate and thus accelerates also the precipitation of carbonate under buffered conditions.

The present invention thus discloses a method to dispose of brine produced in desalination plants by the steps of:
a. feeding the brine containing divalent cations to a scrubber system containing at least one inoculated microorganism that exhibits a carbonic anhydrase activity;
b. optionally adding a basic material in order to reach a pH of at least 6;
c. precipitating carbonate and dissolving CO₂ into bicarbonate ions thereby capturing CO₂ released from the associated power plant with the same or other microorganisms;
d. recovering precipitated carbonates- and bicarbonate-enriched brine for further use.

The precipitated carbonates comprise primarily calcium and magnesium carbonates.

CO₂ released from the power plant associated with desalination plants is absorbed by its sequestration as dissolved HCO₃⁻ and precipitated CaCO₃ and/or MgCO₃.

The reaction medium must be sufficiently alkaline to maintain the precipitation reaction. By sufficiently alkaline conditions is meant a pH of at least 6, preferably ranging from 7 to 10 and more preferably ranging between 8 and 9. The alkaline material can be selected from natural, industrial or agricultural sources. Preferably it is selected from gypsum, slag, red mud, alkaline manure or lime.

The cation source contained in brines comprises mainly Ca²⁺, Na⁺, Mg²⁺ and K⁺. The present invention is primarily interested in cations, preferably calcium and magnesium. The chemical characteristics of reject brines are however a reflection of feed water quality, desalination technology and the chemicals used for pre and post treatment.

Several microbiological biomineralisation processes are known and any of these may play an active role in the present invention. Metabolic pathways of microbiological calcium carbonate formation comprise autotrophic or heterotrophic pathways. They are described for example by Castanier et al. in 'Bacterial roles in the precipitation of carbonate minerals', in Microbiol. Sediments (2000).

According to these authors, the autotrophic pathways include non-methylotrophic methanogenesis, anoxygenic photosynthesis and oxygenic photosynthesis. They all consume CO₂, thereby inducing CO₂ depletion in the vicinity of the bacteria, and thus favouring calcium carbonate precipitation in the presence of calcium ions.

The heterotrophic pathways cannot synthesise compounds directly from CO₂ and their activity requires the presence of organic material. Two microbiological processes may thus occur, a first autotrophic process that provides the organic source and a second heterotrophic process. Both result directly or indirectly in CO₂ sequestration by the capture of carbon. Alternatively, a non-microbiological source of organic compounds can be provided to the sole heterotrophic process.

Several microbiological metabolisms have been related to carbonate precipitation and both anaerobic and aerobic metabolisms have to be considered. In general Bacillaceae, Pseudomonadacea, Enterobacteriaceae or Vibrionaceae can be used to precipitate calcite.

In Dupraz et al. (2004), 'Microbe-mineral interactions: early carbonate precipitation in a hypersaline lake (Eleuthera Island, Bahamas)' in Sedimentology, sulphate reduction showed high activity in close association with the carbonate precipitation at the top of microbiological mats of a hypersaline lake. Consequently sulphate reducing microorganisms are an option, when there is a source of sulphate present like gypsum. In the sulphur cycle, microorganisms use a single metabolic pathway: the dissimilatory reduction of sulphate. The environment must be anoxic and rich in organic matter, calcium and sulphate. Microorganisms consume protons while reducing sulphate into sulphide and producing carbonates.

One other metabolic cycle involved in the precipitation of calcium carbonate is the nitrogen cycle. Three different pathways result in the production of ammonia and carbonate and bicarbonates ions: (1) the ammonification of amino-acids in aerobiosis (2) the dissimilatory reduction of nitrate and (3) the degradation of urea or uric acid. This induces a pH increase and in the presence of Ca²⁺, carbonate precipitates. In the present invention any microorganism capable of one of the above metabolisms and thriving on saline brines could be selected.

Most preferably moderately halophilic bacteria known to be effective in precipitating carbonate minerals under different salinities, should be included like species of the genera *Vibrio, Halomonas, Marinomonas, Chromohalobater and Halobacillus.*

The brines are characterised by a high salinity and an elevated concentration of cations, typically approximately twice the concentration of the feed's water. It provides not only a suitable environment for microorganisms such as halotolerant microorganisms, but also favours conditions where biomineralisation processes by said microorganisms can occur.

Carbonate precipitation implies sequestration of CO₂, thereby mitigating CO₂ emissions. In addition, the precipitate is a valuable material that can be used for example in such applications as construction material..

In a first preferred embodiment, the present invention discloses a process that comprises the steps of:
a) feeding the brine to a scrubber system containing at least one inoculated microorganism that exhibits a carbonic anhydrase activity;
b) simultaneously capturing CO₂ released from the associated power plant with the same or other microorganisms;
c) recovering precipitated carbonate- or bicarbonate-enriched brine for further use;
d) Injecting the carbonate- and bicarbonate-enriched brine in geological structures where in situ microbiological precipitation can further take place;
e) sequestering CO₂ under the form of calcium and optionally magnesium carbonates and in the form of dissolved bicarbonate ions.

Suitable geological structures can be selected for example from saline aquifers, depleted oil fields, empty quarries or saline lagoons.

This first embodiment offers the advantage of capturing and sequestering CO₂ as carbonate such as calcium carbonate in a cost and energy efficient manner. The use of microbiological processes speeds up the process at ambient temperature. Carbonic anhydrase (CA) widespread in the Archaea and Bacteria domains, is an ancient enzyme that catalyses inter-conversion of CO₂ and bicarbonate and is represented as

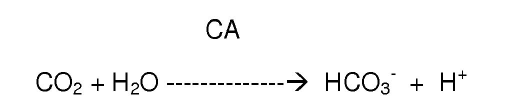

Ramanan et al. (Ramanan R., Kannan K., Sivanesan S.D., and Vaimakis T.C., in World Journal of Microbiology and Biotechnology, 25, 981, 2009) have characterised the carbonic anhydrase of *Citrobacter freundii,* and, in particular, the capacity of the purified enzyme to promote precipitation of carbonate and therefore its use as carbon bio-sequestration tool.

Scrubber systems are air pollution controlled devices used to remove particles or gases from industrial exhaust schemes.

In a recent study, Bond et al. (Bond G.M., Stringer J., Brandvold D.K., Simsek A., Medina M.G., and Egeland G., in Energy fuels, 15, 309, 2001; and Bond G.M., Stringer J., McPherson B., Liu N., and Abel A., in 7th International Conference on Greenhouse Gas Control technologies, Vancouver, CA, 5 Sept. 2004) disclose the combination, in a scrubber system, of a flow of brine containing a Ca²⁺ source with purified bovine CA. A similar system, also using purified CA is disclosed in US-A-7,132,090.

The present invention discloses a system comprising high CA activity microorganisms to accelerate reactions under buffered conditions resulting in an accelerated carbonate precipitation.

It is known that mono-, di- or tri-ethanol amines in solution act as weak bases and can neutralise dissolved acidic compounds. For example aqueous mono-ethanol amine (MEA) can neutralise CO₂ into HCO₃⁻ bicarbonate ion. Similarly large contact surface area in a scrubber can selectively remove CO₂ from mixed gas streams.

It is also known, for example in old nuclear submarines, to use purified CA in scrubbers operated at 2 different temperatures. CA is used to accelerate the absorption of CO₂ by a lean buffer mixture in the low temperature absorber. The CO₂-enriched mixture is then raised to a higher temperature in a stripper wherein CA accelerates stripping. Such system is described for example in Burk (Burk D., in Ann. N Y Acad. Sci., 92, 372, 1961).

Instead of releasing CO₂ in a separate process by heating up, as described hereabove, natural processes as used in the present invention allow the capture and sequestration of CO₂ under the form of precipitated carbonate at ambient temperature. This latter process requires the presence of counter-ions which can be found in brine. To neutralise the H⁺ ions resulting from the production of CO₃²- the bicarbonate enriched solution is then mixed with an alkaline material in order to maintain an alkaline buffer capacity. Said alkaline material can for example be selected from gypsum, slag, red mud, alkaline manure or lime.

CA accelerates processes on either side of the equation. It is a zinc-containing enzyme as described by Birgit, E. Albert & James G. Ferry (1994) 'A carbonic anhydrase from the archaeon 'Methanosarcina thermophila'in Proc. Natl. Acad. Sci. USA, 91, 6909-6913*.* It involves 'an attack of zinc-bound OH- on a CO₂ molecule loosely bound in a hydrophobic pocket. The resulting zinc-coordinated HCO₃⁻ ion is displaced from the metal ion by H₂O'. Lindskog (Lindskog S., in Pharmacol. Ther, 74, 1, 1997) or Lindskog and Coleman (Lindskog S., ans Coleman J.E., in Proc. Natl. Acad. Sci. U.S.A., 70, 2505, 1973) have further shown that CA activity is a function of pH and they describe the interconversion between CO₂ and HCO₃⁻ .

In a second embodiment, the present invention discloses a process that comprises the steps of:
a) feeding the brine to a scrubber system containing at least one inoculated microorganism that exhibits a carbonic anhydrase activity;
b) simultaneously capturing CO₂ released from the associated power plant with the same or other microorganisms;
c) recovering carbonate- and bicarbonate-enriched brine for further use;
d) optionally adding alkaline material;
e) decanting and storing at the surface in a large polder;
characterised in that it provides a large decantation space, designed for big CaCO₃ build-up, such as for example a dike enclosed polder.

The alkaline material can be selected for example from gypsum, red mud, alkaline manure, slag or lime.

It offers the further advantage of reclaiming land.

In a third embodiment according to the present invention, brine is used as feedstock in aerobic water treatment units wherein the high concentration in divalent cations contained in said brine provides means for promoting carbonate precipitation.

In traditional waste water treatment, organic carbon is oxidised by several microbiological pathways whereby CO₂ can be liberated. This can be accompanied by scaling often considered as a problem. Regulating Ca²⁺ optionally Mg²⁺ concentration as described in the present invention creates suitable conditions favouring the precipitation of carbonates. CO₂ liberation associated with the decomposition of organic matter is thereby prevented and instead, CO₂ is sequestered by precipitation as carbonate.

In a fourth embodiment the present invention provides the combination of a desalination unit and of a Solvay process plant wherein brine provides the two sources of raw materials needed in the Soda Ash Process:
a) brine is fed to the Soda Ash process units as Na⁺ source;
b) CaCO₃ precipitated in brines is used as replacement for the limestone usually extracted from quarries.

The Soda Ash process uses lime and sodium chloride to produce a variety of sodic feedstock and calcium containing by-products as summarised by global equation:

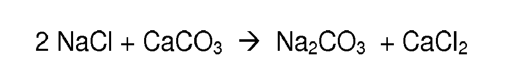

Brine being subjected to microbiological carbonate precipitation therefore provides the two reactants necessary for the Soda Ash process.

Direct use of brines from desalinating units as suggested in this invention partially avoids brine extractions from deep saline aquifers, direct mining from saline mines and CaCO₃ mining from quarries, and its associated CO₂ emissions.

### EXAMPLES.

The figures presented here are derived from public available document and scientific publications, such as from Best Available Techniques (BAT) reference documents on the Large Combustion Plants, or on large Volume of Solid Inorganic Chemicals Family (2004), or from Mohamed et al., 'impact of land disposal of reject brine from desalination plants on soil and groundwater' in Desalination (2005), or fro; Busch, M. and W. E. Mickols (2004) 'Reducing energy consumption in seawater desalination.' In Desalination (2004), or from Bond, G. M (2004) in 'Early results from a laboratory-scale pilot-plant demonstration of enzyme catalyzed CO2 sequestration with produced waters as cation source' in 7th International Conference on Greenhouse Gas Control Technologies, Vancouver, Canada.

In all calculation the following is assumed:
a) 60% of the sea water inflow of a desalination unit is transformed into potable water and the remaining 40% is brine production.
b) average concentrations of Ca²⁺ and Na⁺ in brine are respectively of 550 mg/L and 3100 mg/L.
c) size of a small desalination unit: Sea water inflow: 150 m³/day; Fresh water production: 90 m³/day, Brine production: 60 m³/day.
d) size of a large desalination unit, such as the Aquasure project in the State of Victoria, Australia, may reach the desalination capacity of : Sea water inflow: 750, 000 m³/day; Fresh water production: 450,000 m³/day; Brine production: 300, 000 m³/day.
e) magnesium was not accounted for.

### General precipitation capacities of brines:

● Calcium production/year:
   small unit: 11.88 t Ca²⁺/year
   large unit: 59,400 t Ca²⁺/year
● Sodium production/year:
   small unit: 67.31 t Na⁺/year
   large unit: 336,550 t Na⁺/year
● CaCO₃ precipitation:
   Assuming that all calcium present in the brines is precipitated:
      small unit: 30.29 t CaCO₃/year
      large unit: 142,312 t CaCO₃/year

This represents a capture of 13.66 t CO₂/year for small units and 68,310 t CO₂/year for large unit.

### Fraction of CO₂ emitted as compared to CO₂ fixed by precipitation

● The average energy consumption of a desalination units is 2.0 kWh/m³ sea water treated.
● Assuming that the energy is produced by a coal fired plant, the corresponding CO₂ emission is 750 kg CO₂/MWh electricity produced.
● This results in an average of 1.5 kg emitted CO₂/m³ of sea water treated.
● CO₂ emissions of small and large desalination units are thus respectively of 225 kg CO₂/day and 1125 t CO₂/day.
● Microbiological precipitation in brines could capture and fix the equivalent of 17% of the CO₂ emitted due to the energy used during the desalination process.

### Example 1.

In the first embodiment according to the present invention, one year of activity with a decrease of the calcium concentration in brine to 518,1 mg/l, resulted in CO₂ sequestration as follows:
● In small units: 28 t CaCO₃ precipitated amounting to 12.86 t CO₂ sequestration.
● In large plants: 356 kt CaCO₃ precipitated amounting to 160 ktCO₂ sequestration

### Example 2

In the third embodiment according to the present invention, brine was used as feedstock for aerobic water treatment units. Data from a small waste water treatment for pulp and paper mill effluents was used. Waste water of paper industry is known to be heavily charged in organic carbon. It is treated biologically by the activated sludge method.
● total waste water production: 60,000 m³/day.
● amount of organic carbon treated: 34.2 t/day.

In a big desalination unit, a total of 165 t Ca²⁺/day is produced.

The Ca²⁺ present in brines was thus sufficient to feed the effluents of 4 small aerobic units, adapted to the microbiological precipitating process, producing 150 kt CaCO₃, sequestering 66 kt CO₂.

### Example 3.

In the fourth embodiment according to the present invention, the sodium produced by the brine was fed into a Solvay process.

A typical Soda Ash unit needs an average of 1 Mt of sodium and limestone each year.

The brines produced in one large desalination units provide up to 31 % of the sodium necessary in the Soda Ash process per year in one typical Solvay unit.

Likewise thanks to the microbiological precipitated brines, up to 30% of the necessary CaCO₃ can be produced.

The small desalination units are however not suitable to produce the Na⁺, Ca²⁺ and CaCO₃ precipitation needed in the Soda Ash process of a typical Solvay unit.

## Claims

1. A method for precipitating divalent cations, contained in brine originating from desalination plants as carbonates and simultaneously achieving sequestration of CO₂ using halotolerant microorganisms having a carbonic anhydrase activity (CA).

2. The method of claim 1 wherein the halotolerant microorganisms having a carbonic anhydrase activity (CA) are living or whole-cell bacteria and/or archaea.

3. The method of claim 2 wherein the halotolerant microorganisms are halophilic microorganisms selected from natural habitat.

4. The method of claim 3 wherein the halophilic microorganisms are selected from *Vibrio, Halomonas, Marinomonas, Chromohalobacter and Halobacillus.*

5. The method of any one of the preceding claims wherein the divalent cations are calcium or magnesium.

6. The method of any one of the preceding claims comprising the steps of:
a) feeding the brine containing divalent cations, to a scrubber system containing at least one inoculated microorganism that exhibits a carbonic anhydrase activity;
b) capturing CO2 released from the associated power plant as dissolved bicarbonate and precipitated carbonate with the same as, or other microorganisms than, used in step a);
c) recovering precipitated carbonate- and bicarbonate-enriched brine for further use.

7. The method of claim 6 further comprising, between steps a) and b), the addition of an alkaline material in an amount sufficient to reach a pH of at least 6.

8. The method of claim 7 wherein the alkaline material is selected from natural, industrial or agricultural sources, preferably from gypsum, slag, red mud, alkaline manure or lime.

9. The method of any one of the preceding claims comprising the further step of injecting the bicarbonate- and carbonate-enriched brine in geological structures where further microbiological precipitation takes place.

10. The method of claim 9 wherein the geological structure is selected from deep saline aquifers, depleted oil fields, empty quarries or saline lagoons.

11. The method of any one of claims 1 to 8 wherein the precipitated carbonate slurry is stored at the surface, optionally with alkaline material, over a large polder like decantation area.

12. The method of any one of claims 1 to 8 wherein the precipitated carbonate slurry is used as source of raw material in a Soda Ash process.

13. The method of any one of claims 1 to 8 wherein calcium cured brine is used as Na⁺ source in a Soda Ash process.

14. Use of halotolerant microorganisms having a carbonic anhydrase activity to promote and/or accelerate both the generation of bicarbonate and carbonate ions from CO2 and carbonate precipitation with divalent cations contained in brines.
